# EUROPÄISCHE PATENTSCHRIFT

(11) **EP 3 646 443 B1**
(45) Veröffentlichungstag und Bekanntmachung des Hinweises auf die Patenterteilung: **02.03.2022**
(21) Anmeldenummer: 18726797.6
(22) Anmeldetag: 23.05.2018
(51) Int. Cl.: H02K 3/50

(54) **STATOR-VERSCHALTUNGSEINRICHTUNG FÜR EINE ROTIERENDE ELEKTRISCHE MASCHINE**
STATOR INTERCONNECTION DEVICE FOR A ROTATING ELECTRICAL MACHINE
DISPOSITIF D'INTERCONNECTION POUR UN STATOR POUR UNE MACHINE ÉLECTRIQUE ROTATIVE

(30) Priorität: 30.06.2017 DE 102017211168
(43) Veröffentlichungstag der Anmeldung: 06.05.2020
(73) Patentinhaber: ZF Friedrichshafen AG, 88046 Friedrichshafen (DE)
(72) Erfinder: WILLACKER, Katja, 97353 Wiesentheid (DE); WITTMANN, Jochen, 97705 Burkardroth (DE); LINDWURM, Roland, 97526 Sennfeld (DE); WIEDER, Christoph, 96328 Küps (DE)
(74) Vertreter: ZF Friedrichshafen AG
(86) Internationale Anmeldenummer: PCT/EP2018/063504
(87) Internationale Veröffentlichungsnummer: WO 2019/001852

(56) Entgegenhaltungen:
- US-A1- 2015 097 453

## Beschreibung

Die vorliegende Erfindung bezieht sich auf eine Stator-Verschaltungseinrichtung für eine rotierende elektrische Maschine gemäß dem Oberbegriff von Patentanspruch 1, auf einen Stator gemäß Patentanspruch 8 und auf eine elektrische Maschine gemäß Patentanspruch 10.

Eine Verschaltungseinrichtung für einen Stator einer elektrischen Maschine wird beispielsweise in der DE 102016200115 A1 der Anmelderin beschrieben, welche dort der Verschaltung von an einem Statorblechpaket mittels Wickelkörpern kreisförmig angeordneten Statorspulen mit Spulenenden dient. Dabei weist die Verschaltungseinrichtung mehrere koaxial zueinander angeordnete Verbindungsleiter auf, die mittels Isolierschichten elektrisch gegeneinander isoliert sind. Die Verbindungsleiter sind als Ringscheiben ausgeführt und axial gestaffelt am Stator angeordnet. Zur Anordnung am Stator weist jeder Verbindungsleiter als Ausnehmungen ausgebildete Befestigungsabschnitte auf, welche axial überdeckend zueinander angeordnet sind und wodurch die Verbindungsleiter gemeinsam an jeweils einem, an einem Wickelkörper des Stators vorgesehenen und als abstehenden Stift ausgebildeten Verbindungselement festgelegt werden können. Bei einer derartigen Anordnung von vergleichsweise eng gestapelten Verbindungsleitern sind besondere Maßnahmen erforderlich, um insbesondere an den Randbereichen der genannten Ausnehmungen elektrische Spannungsdurchbrüche und somit unerwünschte Kurzschlüsse sicher zu vermeiden. Eine gattungsgemäße Verschaltungseinrichtung, bei der die Verbindungsleiter darüber hinausgehend mit einem Kunststoff umgossen sind, ist mit der US 2015/0097453 A1 bekannt geworden.

Der vorliegenden Erfindung liegt die Aufgabe zugrunde, eine bauraumsparende, kostengünstige und spannungsfeste Verschaltungseinrichtung der eingangs genannten Art, einen Stator und eine elektrische Maschine mit einer solchen Verschaltungseinrichtung bereit zu stellen.

Diese Aufgaben werden durch eine Verschaltungseinrichtung mit den Merkmalen des Patentanspruchs 1, durch einen Stator gemäß Patentanspruch 8 und durch eine elektrische Maschine gemäß Patentanspruch 10 gelöst.

Vorteilhafte Ausgestaltungen und Weiterbildungen der Erfindung sind den abhängigen Ansprüchen sowie der nachfolgenden Figurenbeschreibung entnehmbar.

Gemäß einem ersten Aspekt der Erfindung wird eine Verschaltungseinrichtung für eine Statorwicklung einer rotierenden elektrischen Maschine vorgeschlagen, umfassend eine Mehrzahl von Verbindungsleitern, welche als Ringscheiben ausgeführt, koaxial gestapelt und gegenseitig elektrisch isoliert sind, wobei jeder Verbindungsleiter mehrere in Umfangsrichtung verteilte Befestigungsöffnungen zur Festlegung der Verschaltungseinrichtung an einem Stator aufweist. Die Verbindungsleiter sind derart gestapelt, dass die Befestigungsöffnungen satzweise axial zueinander positioniert sind und sich unter Ausbildung eines gemeinsamen Befestigungsdurchgangs im Wesentlichen überdecken. Die Verschaltungseinrichtung zeichnet sich dadurch aus, dass die Verbindungsleiter axial voneinander beabstandet und mit einem Kunststoff umgossen sind, wodurch die Verschaltungseinrichtung ein Metall-Kunststoffverbundteil, insbesondere ein Kunststoffspritzgussteil ausbildet. Es sind dabei zumindest zwei Arten von Befestigungsöffnungen mit einer unterschiedlichen Öffnungsweite vorgesehen, welche eine kleinere und eine größere Befestigungsöffnungen ausbilden. An einem Befestigungsdurchgang sind bei zwei benachbarten Verbindungsleitern eine kleinere und eine größere Befestigungsöffnung ausgebildet, wobei ein Ringraum, der sich von einer Berandung der größeren Befestigungsöffnung bis zu einer Berandung der kleineren Befestigungsöffnung erstreckt, von dem Kunststoff ausgefüllt ist.

Die Ausbildung der Verbindungsleiter als Ringscheiben, insbesondere aus einem band- oder plattenförmigen Kupferhalbzeug ermöglicht eine axial kurzbauende Verschaltungseinrichtung. Die Verbindungsleiter der Verschaltungseinrichtung sind demnach zur axial gestaffelten Anordnung an einem Stator vorgesehen, wozu die Verbindungsleiter mit jeweils einem Satz von Befestigungsöffnungen gemeinsam an jeweils einem an einem Stator vorgesehenen Befestigungselement aufgesteckt und dort dauerhaft festgelegt werden können. Mit Vorteil sind die genannten Befestigungsöffnungen als kreisförmige Ausnehmungen, beispielsweise Ausstanzungen mit einem unterschiedlichen Durchmesser ausgeführt.

Die Ausbildung von unterschiedlich großen Befestigungsöffnungen an axial benachbarten Verbindungsleitern hat den Vorteil, dass an einer Umfangsposition befindliche Randbereiche dieser Verbindungsleiter weiter entfernt sind als der axiale Abstand, d.h. der axiale Zwischenraum dieser Verbindungsleiter. Dadurch kann eine Luft- und Kriechstrecke von auf einem unterschiedlichen elektrischen Potential liegenden Verbindungsleitern vergrößert und die elektrische Durchschlagfestigkeit erhöht werden.

Grundsätzlich ist es bei einer Stapelung von mehreren Verbindungsleitern möglich die Verbindungsleiter zur Erzielung des vorbeschriebenen Vorteils alternierend mit jeweils nur einer Art von Befestigungsöffnungen auszubilden. Das hätte jedoch den Nachteil, dass die stromführenden Verbindungsleiter einen unterschiedlichen Wirkungsquerschnitt und damit einen unterschiedlichen elektrischen Widerstand aufweisen, was zu einer ungleichmäßigen bzw. unsymmetrischen Stromverteilung am Wicklungssystem einer elektrischen Maschine führt.

Es ist in dieser Hinsicht vorteilhaft, an jeweils einem Verbindungsleiter zwei Arten von Befestigungsöffnungen mit unterschiedlicher Größe, d.h. insbesondere mit unterschiedlichem Durchmesser vorzusehen und diese im Wesentlichen symmetrisch an einem Verbindungsleiter zu verteilen. Die unterschiedlichen Befestigungsöffnungen können zu diesem Zweck bevorzugt in Umfangsrichtung abwechselnd ausgebildet werden, so dass eine große und eine demgegenüber kleinere Befestigungsöffnung in Umfangsrichtung benachbart sind.

Es ist weiter vorgesehen, die Verbindungsleiter mit einem Kunststoff zu umspritzen bzw. zu umgießen und dabei eine jeweils größere Befestigungsöffnung von deren Randbereich aus gesehen bis etwa zu der Berandung der kleineren Befestigungsöffnung mit dem Kunststoff auszufüllen, das heißt eine größere Befestigungsöffnung teilweise auszugießen. Durch das Einbringen des isolierenden Kunststoffs wird die elektrische Durchschlagfestigkeit im Bereich der Befestigungsöffnungen noch weiter erhöht. Zum Vergießen oder Umspritzen der Verschaltungseinrichtung findet mit Vorteil ein spritzgussfähiger Thermo- oder Duroplastwerkstoff Anwendung. Alternativ kann dazu beispielsweise auch je nach Anwendungsfall und Bauraum- bzw. Umgebungsvoraussetzungen ein Elastomer Verwendung finden.

Die Verschaltungseinrichtung liegt somit als vorgefertigte Baueinheit zur Anordnung an einem Stator vor. Insbesondere kann diese als ein werkzeugfallendes ZSB-Bauteil mit vergleichsweise deutlich reduzierten Prozess- und Montageschritten gefertigt werden.

Zur stirnseitigen Anordnung der Verschaltungseinrichtung am Stator bildet der statorseitige Verbindungsleiter im Bereich einer Befestigungsöffnungen eine Anlagefläche zur Anlage an einem statorseitigen Befestigungsbereich oder Befestigungselement aus. Es steht also unabhängig von der konkreten Ausbildung einer in dem Verbindungsbereich vorliegenden Befestigungsöffnung stets eine Anlagefläche mit demselben Querschnitt zur Verfügung, wobei vorzugsweise zudem alle Anlageflächen in einer gemeinsamen Radialebene ausgeführt sind. Alternativ können die Anlageflächen auch in unterschiedlichen Ebenen ausgeführt sein, was jedoch fertigungsseitige Nachteile zur Folge hat.

Ein teilweises Ausfüllen der größeren Befestigungsöffnungen hat auch Vorteile auf der dem Stator abgewiesenen Stirnseite der Verschaltungseinrichtung. Bei der Anordnung am Stator wird dort gleichfalls eine von der jeweiligen Umfangsposition und der jeweils vorhandenen Art der Befestigungsöffnung unabhängige und somit identische Anlagefläche für ein statorseitiges Befestigungselement, beispielsweise einen Befestigungskopf ausgebildet. Diese Anlageflächen können dadurch in derselben Ebene angeordnet werden, was Vorteile für eine automatisierte Fertigung bietet.

Sofern bei den gestapelten Verbindungsleitern an einer Umfangsposition unterschiedlich große Befestigungsöffnungen vorliegen, kann durch die erläuterte Einbringung des Kunststoffs über die axiale Erstreckung dieser Verbindungsleiter ein Axialdurchgang mit einer gleichbleibenden Innenweite, insbesondere mit einem konstanten Innendurchmesser erzeugt werden. Ein statorseitiges Befestigungselement kann die Verschaltungseinrichtung somit über dessen gesamte axiale Erstreckung tragen, wodurch eine verbesserte Befestigung ermöglicht wird.

Gemäß einer vorteilhaften Ausgestaltung der Erfindung ist vorgesehen, dass die zwei Arten von Befestigungsöffnungen mit unterschiedlicher Öffnungsweite an einem Verbindungsleiter vorgesehen sind. Die Befestigungsöffnungen sind bevorzugt auf einem gemeinsamen Teilkreis angeordnet, wobei korrespondierende Befestigungselemente am Stator gleichfalls auf einem dazu identischen Teilkreis ausgebildet sind. Die unterschiedlichen Arten von Befestigungsöffnungen können in Umfangsrichtung abwechselnd ausgebildet sein. Mit weiterem Vorteil können die Befestigungsöffnungen an der Verschaltungseinrichtung auf zwei Teilkreise mit unterschiedlichen Durchmessern verteilt sein.

Gemäß einer vorteilhaften Weiterbildung der Erfindung können an den Verbindungsleitern Zentrieröffnungen vorgesehen sein, um die Mehrzahl der Verbindungsleiter koaxial und gegenseitig voneinander beabstandet in einem Werkzeug, insbesondere zum Umgießen mit Kunststoff in einem Gusswerkzeug aufzunehmen.

Mit weiterem Vorteil wird vorgeschlagen, die Verbindungsleiter derart zu stapeln, dass die Zentrieröffnungen satzweise axial zueinander positioniert sind und sich unter Ausbildung eines Zentrierdurchgangs im Wesentlichen überdecken, wobei an jedem der Verbindungsleiter zumindest zwei Arten von Zentrieröffnungen mit einer unterschiedlichen Öffnungsweite vorgesehen sind, welche eine kleinere und eine größere Zentrieröffnung ausbilden, wobei die die Verbindungsleiter derart gestapelt sind, dass in einem Satz von Zentrieröffnungen eine kleinere und eine größere Zentrieröffnung axial benachbart angeordnet sind und wobei ein Ringraum, der sich von der Berandung der jeweils größeren Zentrieröffnung bis maximal nahezu zu der Berandung der kleineren Zentrieröffnung erstreckt, jedoch diese unmittelbare Berandung nicht einschließt, mit dem Kunststoff ausgefüllt ist.

Das bedeutet, dass an einem der Verbindungsleiter innerhalb des zwischen dem mit Kunststoff ausgefüllten Ringraums und der Berandung der kleineren Zentrieröffnung ein Ringspalt bzw. ein Ringraum verbleibt, welcher beim Spritzgießen oder Vergießen der Struktur einen Zentrierstift des Werkzeugs aufnehmen kann und wobei sich der Zentrierstift in einem zumindest geringfügig außerhalb der Berandung der kleineren Zentrieröffnung liegenden Flächenbereich mittels einer Stützfläche, insbesondere einem Schulterbereich abstützen kann. Mit Vorteil greifen zwei Zentrierpins, jeweils von jeder der beiden Stirnseiten eines Verbindungsleiters in eine solche kleinere Zentrieröffnung ein bzw. an. Gleichzeitig können die Zentrierstifte mit lateralem Abstand die anderen Verbindungsleiter durch die vergleichsweise größeren Zentrieröffnungen berührungsfrei durchgreifen.

Mit besonderem Vorteil können die Zentrieröffnungen mit unterschiedlichen Durchmessern so an den Verbindungsleitern verteilt werden, dass an einer gegebenen Umfangsposition der Verschaltungseinrichtung nur jeweils einer der Verbindungsleiter eine Zentrieröffnung mit dem kleineren Durchmesser ausbildet.

Auf diese Weise können Verbindungsleiter in einem Werkzeug durch kreisförmig angeordnete Zentrierstifte mit auf unterschiedlichem Niveau ausgebildeten Stützflächen konzentrisch und zugleich axial beabstandet angeordnet werden, so dass in die vorgesehen axialen und lateralen Zwischenräume die isolierende Masse, also der Kunststoff eindringen kann.

Des Weiteren können zur Anordnung und Positionierung der Verschaltungseinrichtung in einem Werkzeug ebenso die zuvor beschriebenen Befestigungsöffnungen benutzt werden, indem in diese mehrere Zentrierstifte mit einem etwa dem Innendurchmesser der kleineren Befestigungsöffnungen entsprechenden Außendurchmesser eingreifen.

Günstigerweise weisen die Verbindungsleiter Spulenanschlussbereiche für Spulenenden einer Statorwicklung und Leistungsanschlussbereiche zur Stromversorgung einer elektrischen Maschine auf. Die Spulenanschlussbereiche können dazu als radial nach innen oder außen abstehende Fortsätze ausgebildet werden, welche zur Verschaltung mit Spulenenden eines Stators mit besonderem Vorteil in einer gemeinsamen Radialebene und/oder auf einem gemeinsamen Umfangsbereich bzw. Teilkreis angeordnet sind. Alternativ können die Spulenanschlussbereiche selbstverständlich auch in unterschiedlichen Ebenen angeordnet sein.

Zur weiteren Verringerung einer axialen Dimension der Verschaltungseinrichtung können an den axial gestaffelten Verbindungsleitern am Umfang beabstandete Ausnehmungen vorgesehen sein, durch welche jeweils Spulenanschlussbereiche der weiteren Verbindungsleiter axial hindurchgeführt werden oder dort eingreifen können.

Eine automatisierte Fertigung des Stators kann mit Vorteil leicht ermöglicht werden, indem Spulenenden bevorzugt auf einer gemeinsamen Axial- und Radiallage angeordnet werden, wobei jeweils zwei am Umfang benachbarte Spulenenden von jeweils zwei Spulen ein und demselben Verbindungsleiter zugeordnet sind.

Zum Anschluss der elektrischen Maschine an eine externe Energiequelle können an dem Stator Leistungsanschlussbereiche vorgesehen sein, welche gleichfalls wie die Spulenanschlussbereiche mit Vorteil einteilig mit den Verbindungsleitern ausgeführt sind und wobei an diesen jeweils ein radial nach innen oder außen abstehender Fortsatz vorgesehen ist, welcher ein Verbindungselement wie zum Beispiel eine Einpressmutter aufnehmen kann. Alternativ können die Verbindungsleiter und die Leistungsanschlussbereiche jeweils auch zweiteilig ausgebildet sein. Dabei kann mit weiterem Vorteil ein Leistungsanschlussbereich gegenüber einem Grundkörper des Verbindungsleiters mit einer größeren Materialstärke bzw. -dicke ausgeführt sein.

Gemäß einem weiteren Aspekt der Erfindung wird ein Stator einer elektrischen Maschine vorgeschlagen, wobei an diesem eine Verschaltungseinrichtung mit zumindest einem der vorstehend erläuterten Merkmale vorgesehen ist.

Insbesondere kann der Stator eine Statorwicklung mit mehreren Statorspulen umfassen, wobei die Verschaltungseinrichtung an Verbindungselementen von Wickelkörpern der Statorspulen festgelegt ist.

Die Wickelkörper können aus einem, insbesondere spitzgussfähigen Kunststoff gefertigt sein, so dass sich an diesem leicht entsprechende Verbindungselemente ausbilden lassen. Als Verbindungselemente können zum Zusammenwirken mit den vorgenannten Ausnehmungen der Verbindungsleiter beispielsweise in axialer Richtung von den Wickelkörper abstehende Haltevorsprünge, wie Stifte bzw. Pins dienen, auf welche die Verschaltungseinrichtung als vorgefertigte Baueinheit aufgelegt werden kann und welche zum Beispiel durch eine anschließende thermische Verformung der Pins die Verbindungsleiter dauerhaft und verliersicher dort halten. Alternativ ist ebenso eine Befestigung mittels Klammern, Rastelementen oder ähnlichen Techniken möglich.

Ein Wickelkörper kann im Weiteren einen Wickelbereich aufweisen, der durch einen Wickelträger und zwei den Wickelbereich in axialer Richtung begrenzende und mit dem Wickelträger verbundene Schenkel gebildet ist. Dabei kann das Verbindungselement an einem Schenkel ausgebildet sein, an welchem die Verbindungsleiter axial oder radial zu dem Wickelbereich angeordnet werden können. Verbindungselemente können zur sicheren Festlegung der Verschaltungseinrichtung am Stator auch an beiden Schenkeln vorgesehen sein.

Gemäß einem noch weiteren Aspekt der Erfindung wird eine elektrische Maschine mit einem Rotor vorgeschlagen, welche einen Stator mit zumindest einem zuvor erläuterten Merkmal umfasst.

Nachfolgend wird die Erfindung anhand einer in den Figuren dargestellten Ausführungsform beispielhaft erläutert.

Es zeigen:
- Fig. 1: eine schematische Darstellung einer elektrischen Maschine mit einem Stator und einer Verschaltungseinrichtung;
- Fig. 2a-c: eine Darstellung von einzelnen Verbindungsleitern der Verschaltungseinrichtung
- Fig. 3: eine Darstellung einer Verschaltungseinrichtung in einer Draufsicht;
- Fig. 4: eine vergrößerter Ausschnitt der Verschaltungseinrichtung von Fig. 3;
- Fig. 5: eine teilweise Axialschnittdarstellung der Verschaltungseinrichtung von Fig. 3;
- Fig. 6: eine teilweise Axialschnittdarstellung einer an Wickelkörpern eines Stators festgelegten Verschaltungseinrichtung gemäß Fig. 3;
- Fig. 7: eine ausschnittweise Draufsicht einer Anordnung gemäß Fig. 6.

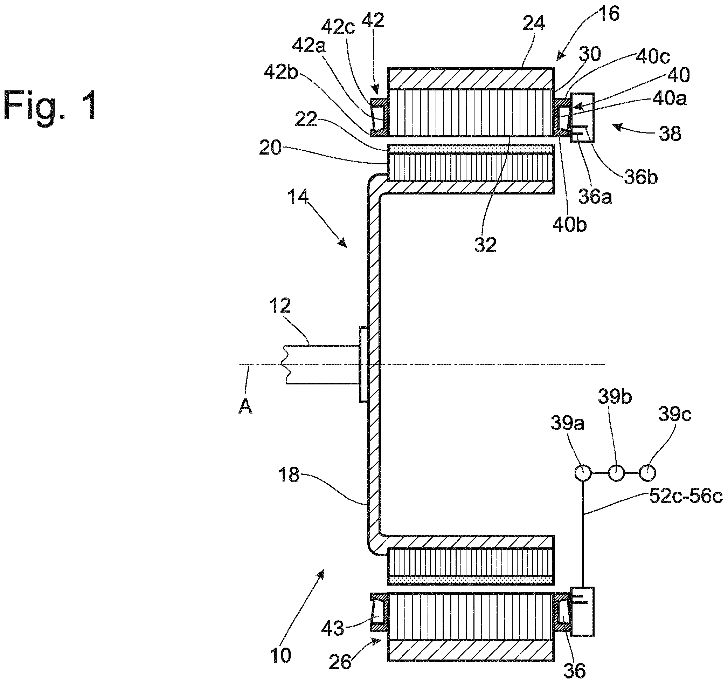

Fig. 1 zeigt schematisch eine elektrische Maschine 10, genauer eine permanenterregte elektrische Synchronmaschine in Innenläuferbauart, mit einem um eine Rotorwelle 12 mit einer Drehachse A drehbaren Rotor 14 und mit einem diesen radial außen umgebenden Stator 16. Der Rotor 14 umfasst einen topfförmigen Rotorträger 18, auf dessen zylindrischen Außenumfangsfläche ein lamelliertes Rotorblechpaket 20 angeordnet ist, welches eine Mehrzahl am Umfang gegenseitig beabstandeter Permanentmagnete 22 trägt.

Der Stator 16 umfasst einen ringförmigen Statorträger 24, in dessen Zentralausnehmung ein ebenfalls aus Blechlamellen gebildetes ringförmiges Statorblechpaket 26 angeordnet ist. Die Drehachse A bildet somit zugleich die Mittelachse A des Stators 16. Der Statorträger 24 kann beispielsweise ein Außen- oder ein Zwischengehäuse der elektrischen Maschine 10 darstellen.

Das Statorblechpaket 26 umfasst ein an dem Statorträger 24 anliegendes ringförmiges Statorjoch 30 und von diesem nach radial innen abstehende Zähne 32, welche zur Bildung einer Statorwicklung mit mehreren Statorspulen 36 bestückt ist. Diese Statorspulen 36 sind mit Hilfe von zwei, aus einem wärmebeständigen Kunststoff bestehenden Isolier- bzw. Wickelkörpern 40, 42 aus einem Kupferdraht um die Zähne 32 gewickelt und sind dort gegen Verrutschen gesichert. Die Wickelkörper 40, 42 umfassen jeweils einen stirnseitig am Blechpaket 26 anliegenden Basisbereich bzw. Wickelträger 40a; 42a und zwei davon etwa rechtwinklig und am Stator 16 axial abragende Schenkel 40b, c; 42b, c, die einen Wickelbereich 43 in radialer Richtung begrenzen.

Die Spulen 36 sind elektrisch einzelnen Strängen zugeordnet, wozu die Spulenenden 36a, b mittels einer in Fig. 1 nur schematisch als Block dargestellten Verschaltungseinrichtung 38 in einer vorbestimmten Art und Weise miteinander verschaltet sind. Der genaue Aufbau der Verschaltungseinrichtung 38 wird im weiteren Verlauf der Beschreibung noch ausführlich erläutert.

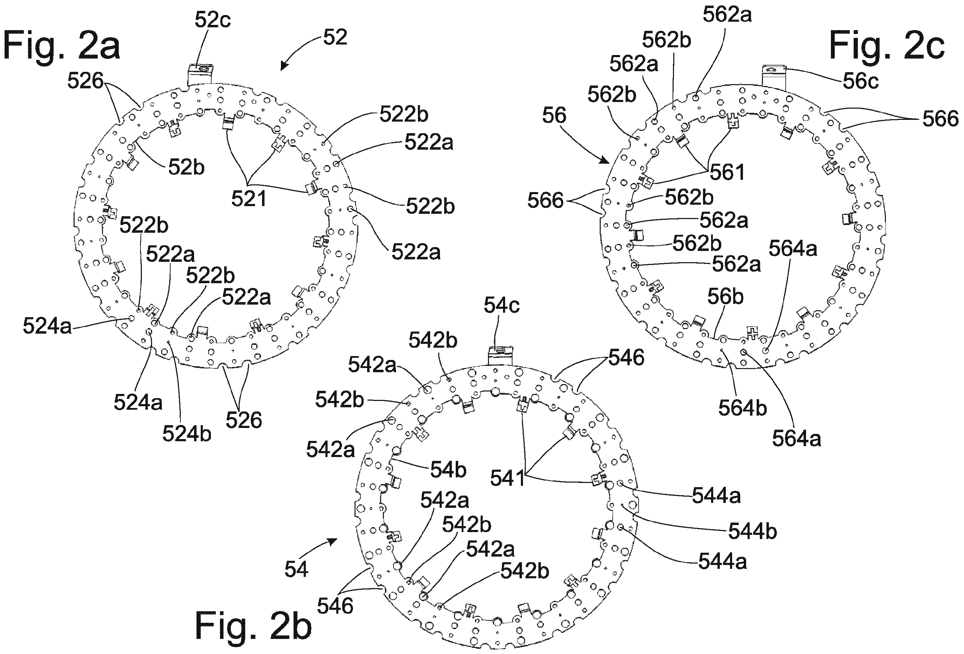

Wie aus den nachfolgenden Fig. 2-7 ersichtlich, umfasst die Verschaltungseinrichtung 38 mehrere mittels eines Isoliermittels, insbesondere einer Kunststoffmatrix 58 gegenseitig isolierte Verbindungsleiter 52, 54, 56, welche zur Kontaktierung mit den Spulenenden 36a, b umfangsmäßig beabstandete Spulenanschlussbereiche 521; 541, 561, aufweisen. Die Verschaltungseinrichtung 38 ist bei dem erläuterten Ausführungsbeispiel mit den Verbindungsleitern 52-56 an den Wickelkörpern 40 festgelegt, wie dieses anhand der weiteren Figuren noch ausführlich erläutert und erkennbar wird.

Die Verschaltungseinrichtung 38 ist über Leistungsanschlussbereiche 52c, 54c, 56c der Verbindungsleiter 52-56 mit einer Leistungselektronik 39a und einer Ansteuerelektronik 39b mit einer elektrischen Energiequelle 39c verbunden (Fig. 1), welche zum Betreiben der elektrischen Maschine 10 die Wicklung mit einem Strom variabler Phase und Amplitude beaufschlagen kann.

Vorliegend sind die Verbindungsleiter 52-56 aus einem Kupfer-Halbzeug, insbesondere aus einer Kupferplatte oder einem Kupferblech mittels eines Stanzprozesses als Ringscheiben hergestellt. Die Verbindungsleiter 52-56 sind axial voneinander beabstandet und mit einem eine Matrix 58 ausbildenden Kunststoff umgossen, wodurch die Verschaltungseinrichtung als ein Metall-Kunststoffverbundteil, insbesondere als ein Kunststoffspritzgussteil ausgebildet ist. Die Verbindungsleiter 52-56 sind also in die Kunststoffmatrix 58 eingebettet, wobei lediglich einzelne Bereiche der ringförmigen Grundkörper, sowie Spulenanschlussbereiche 521, 541; 561 und Leistungsanschlussbereiche 52c, 54c, 56c frei zugänglich sind. Die Verschaltungseinrichtung 38 ist mit den axial gestaffelten Verbindungsleitern 52-56 am Stator 16 koaxial zur Mittelachse A angeordnet.

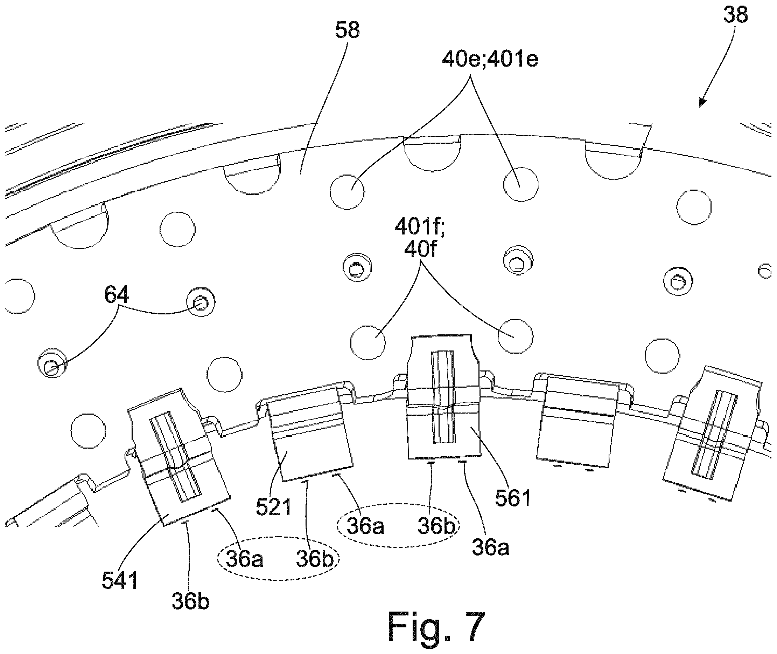

Die Spulenanschlussbereiche 521-561 sind zunächst als Radialfortsätze am radial inneren Umfangsbereich der ringscheibenförmigen Verbindungsleiter 52-56 ausgebildet und dann in eine gemeinsame Lateralebene abgebogen, wo diese zur Verschaltung parallel und im Beispiel axial benachbart zu den radial nach innen ausgerichteten Spulenenden 36a, b angeordnet sind (Fig. 7).

Im dargestellten Ausführungsbeispiel ist die Verschaltung der Spulenenden 36a, b zur Realisierung einer Dreieckschaltung mit jeweils drei Verbindungsleitern 52-56 dargestellt. Weiterhin sind jeweils zwei benachbarte Spulenenden 36a, b von zwei am Umfang benachbarten Spulen 36 auch mit unmittelbar zueinander benachbarten Spulenanschlussbereichen 521-541 eines der Verbindungleiters 52, 54, 56 verbunden, wie das in Fig. 7 anhand der strichlinienförmigen Umrandung erkennbar ist. An einem Verbindungsleiter 52, 54, 56 sind an den sich in Umfangsrichtung zwischen den Spulenanschlussbereichen erstreckenden Bereichen jeweils Ausnehmungen 52b, 54b, 56b vorgesehen, durch welche die Spulenanschlussbereiche 521-561 der beiden weiteren Verbindungsleiter 52-56 axial hindurchgeführt sind bzw. dort eingreifen können. Beispielhaft sind diese Ausnehmungen in den Fig. 2a-c markiert.

Die Kontaktierung der Spulenenden 36a, b mit den Verbindungsleitern 52-56 erfolgt stoffschlüssig, insbesondere durch Löten oder Schweißen.

Zur Festlegung der Verschaltungseinrichtung 38 am Stator 16 weist jeder Verbindungsleiter 52-56 mehrere in Umfangsrichtung verteilte Befestigungsöffnungen 522, 542, 562 auf. Die Verbindungsleiter 52-56 sind derart gestapelt, dass die Befestigungsöffnungen 522-562 satzweise axial zueinander positioniert sind sich jeweils unter Ausbildung eines gemeinsamen Befestigungsdurchgangs 60 im Wesentlichen überdecken. Dazu sind an einem Verbindungsleiter 52-56 jeweils zwei Arten von Befestigungsöffnungen 522-562 mit einer unterschiedlichen Öffnungsweite vorgesehen, welche größere Befestigungsöffnungen 522a-562a und kleinere Befestigungsöffnungen 522b-562b ausbilden (Fig. 2a-c).

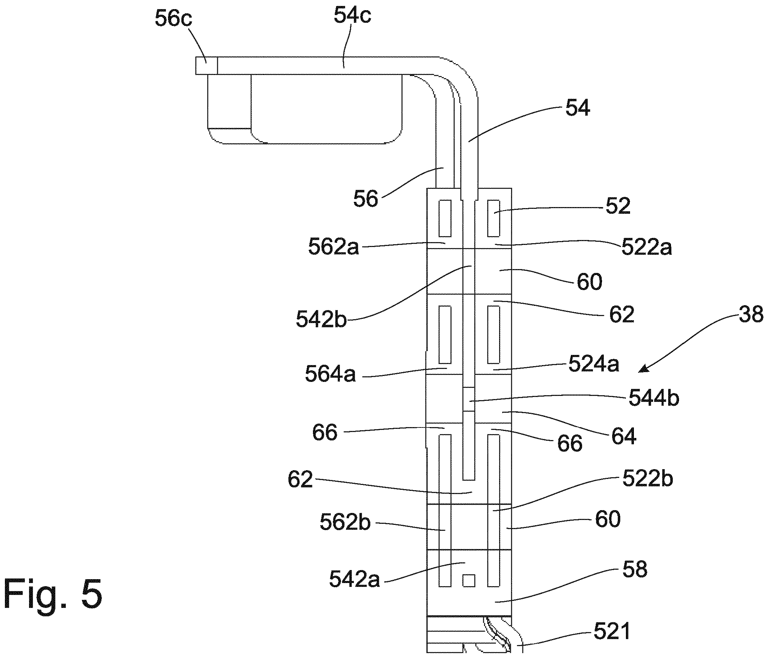

In den Fig. 5 ist erkennbar, dass an einem Befestigungsdurchgang 60 bei zwei benachbarten Verbindungsleitern 52, 54 eine größere Befestigungsöffnung 522a und eine kleinere Befestigungsöffnung 542b ausgebildet sind. Es ist dort weiter sichtbar, dass ein Ringraum 62, der sich von einer Berandung der größeren Befestigungsöffnung 522a bis zu einer Berandung der kleineren Befestigungsöffnung 542b erstreckt, ebenso von dem Kunststoff 58 ausgefüllt ist. Durch diese Ausbildung ist also der gegenseitige Abstand der Berandungen von zwei axial benachbarten Befestigungsöffnungen vergrößert und durch die Anwesenheit des Kunststoffs 58 zugleich mit einem Dielektrikum ausgefüllt, wodurch eine Luft- und Kriechstrecke und damit die elektrische Durchschlagsfestigkeit zwischen zwei auf einem unterschiedlichen elektrischen Potential liegenden Verbindungsleitern vergrößert wird.

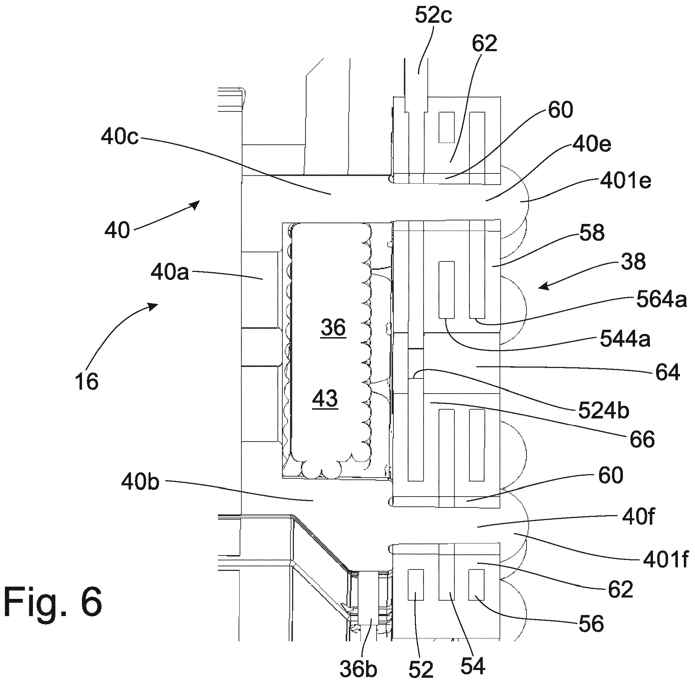

Der Umfangsverteilung der Befestigungsöffnungen 522-562 entsprechend sind an den Schenkeln 40b, c der Wickelkörper 40, 42 Verbindungselemente in Form von axial abstehenden Pins 40e, f ausgebildet, welche die axial gestapelten Verbindungsleiter 52-56 mittels der Befestigungsdurchgänge 60 aufnehmen und beispielsweise durch ein nachfolgendes Heißverstemmen oder eine andere Verbindungstechnik gegebenenfalls unter Einbeziehung weiterer Verbindungselemente in der eingenommenen Lage fixieren. Dabei können die Pins 40e, f, wie in Fig. 6 dargestellt, pilzartige Befestigungsköpfe 401 e, f ausbilden, welche die Kunststoffmatrix 58 und die Befestigungsdurchgänge 60 radial übergreifen.

Es ist somit in einer Zusammenschau der Fig. 2-7 erkennbar, dass die Befestigungsöffnungen 522-562 der Verbindungsleiter 52-56 axial überdeckend angeordnet sind und dass die Verbindungsleiter 52-56 damit gemeinsam an jeweils einem Verbindungselement 40e, f eines Wickelkörpers 40 festgelegt sind. In Fig. 6 sind die Verbindungsleiter 52-56 axial zu den Wickelbereichen 43 angeordnet.

Zur Ausbildung der Kunststoffmatrix 58 werden die einzelnen Verbindungsleiter 52-56 in einer definierten Weise von Zentrierstiften eines hier zeichnerisch nicht dargestellten Gusswerkzeugs aufgenommen, wozu an den Verbindungsleitern 52-56 Zentrieröffnungen 524-564 vorgesehen sind, um die Verbindungsleiter 52-54 koaxial und gegenseitig voneinander beabstandet in dem Werkzeug zu halten.

Die Verbindungsleiter 52-56 werden dabei derart gestapelt, dass die Zentrieröffnungen 524-564 satzweise axial zueinander positioniert sind und sich unter Ausbildung von Zentrierdurchgängen 64 im Wesentlichen überdecken. An jedem der Verbindungsleiter 52-56 sind zumindest zwei Arten von Zentrieröffnungen 524-564 mit einer unterschiedlichen Öffnungsweite vorgesehen, welche größere Zentrieröffnungen 524a-564a und kleinere Zentrieröffnungen 524b-564b ausbilden. Die Verbindungsleiter 52-56 sind derart gestapelt, dass in einem Satz von Zentrieröffnungen 524-564 eine größere Zentrieröffnung 524a-526a und eine kleinere Zentrieröffnung 524b-526b axial benachbart angeordnet sind. Dabei bildet sich ein Ringraum 66, der sich von der Berandung der jeweils größeren Zentrieröffnung 524a-526a bis maximal nahezu zu der Berandung der kleineren Zentrieröffnung 524b-526b erstreckt, jedoch diese unmittelbare Berandung nicht einschließt. Dieser Ringraum 66 ist ebenso mit dem Kunststoff 58 ausgefüllt.

Wie besonders gut in Fig. 6 erkennbar, sind die Zentrieröffnungen 524-564 mit unterschiedlichen Durchmessern so verteilt sind, dass an einer gegebenen Umgangsposition der Verschaltungseinrichtung 38 nur jeweils einer der Verbindungsleiter 52-56 eine Zentrieröffnung 524b-564b mit dem kleineren Durchmesser ausbildet. Zudem sind die Zentrieröffnungen 524-564 an jeweils einem der Verbindungsleiter 52-56 in Umfangsrichtung so verteilt, dass auf zwei größere Zentrieröffnungen 524a-564a jeweils eine kleinere Zentrieröffnung 524b-564b folgt.

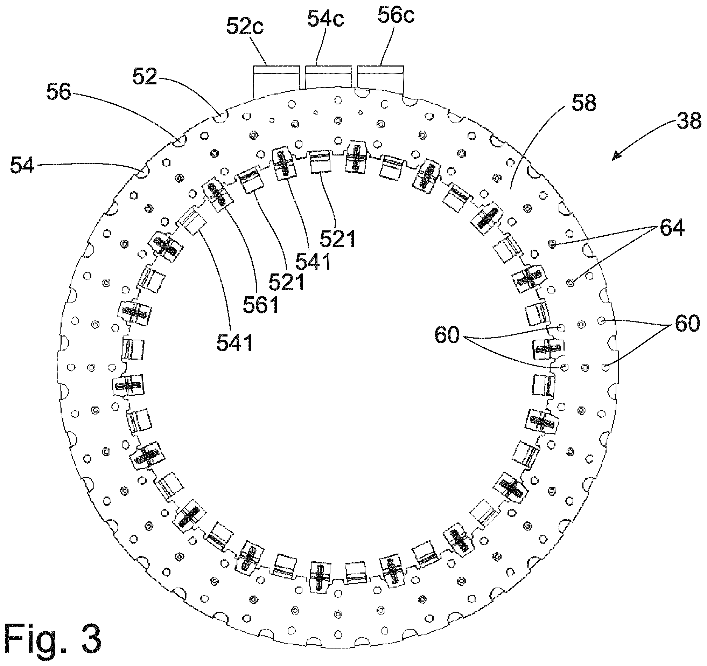

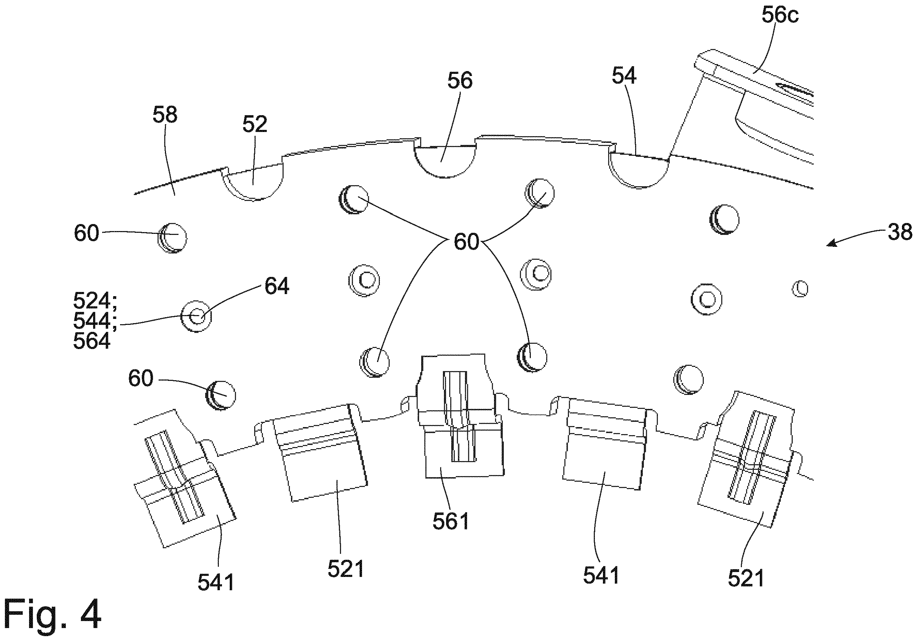

Es ist mit Verweis auf die Figuren 2a-c sichtbar, dass am Außenumfangsbereich der Verbindungsleiter 52-56 regelmäßig verteilte halbkreisförmige Ausnehmungen 526, 546, 566 ausgebildet sind, deren Zwischenräume bis auf dort vorhandene Befestigungsöffnungen 522-562 umfangsmäßig geschlossen sind. Die Verbindungsleiter 52-56 sind so gestapelt, dass an einer bestimmten Umfangsposition lediglich zwei Ausnehmungen 526, 546; 526, 566; 546, 566 und ein Zwischenraum axial in Deckung befinden, so dass in einem Gusswerkzeug an dieser Position jeweils einer der Verbindungsleiter 52-56 gehalten werden kann. Nach dem Einbringen des Kunststoffs sind die einzelnen Verbindungsleiter 52-56 an diesen Positionen freigestellt, wie das an der vergossenen Verschaltungseinrichtung gemäß der Fig. 3, 4 gut erkennbar ist. Die nicht mit Kunststoff abgedeckten Bereiche der Verbindungsleiter 52-56, insbesondere im Bereich der Zentrieröffnungen 524-564 und im Bereich der Ausnehmungen 526-566 können eine Verlustwärme direkt an die Umgebung abgeben und somit eine verbesserte Kühlung der Verbindungsleiter bewirken.

Die mit Verweis auf Fig. 1 angesprochenen Leistungsanschlussbereiche 52c, 54c, 56c sind gleichfalls als radiale Fortsätze vom ringförmigen Grundkörper ausgehend ausgebildet und weisen einen im Vergleich zu den Spulenanschlussbereichen 521, 541, 561 größeren elektrischen Wirkungsquerschnitt auf. In Fig. 2, 3 und 5 sind diese Fortsätze radial außen an den Verbindungsleitern 52, 54, 56 ausgeführt.

### Bezugszeichen

- 10: elektrische Maschine
- 12: Rotorwelle
- 14: Rotor
- 16: Stator
- 18: Rotorträger
- 20: Rotorblechpaket
- 22: Magnet
- 24: Statorträger
- 26: Statorblechpaket
- 30: Statorjoch
- 32: Zahn
- 36: Statorspule
- 36a, b: Spulenende
- 38: Verschaltungseinrichtung
- 39a: Leistungselektronik
- 39b: Ansteuerelektronik
- 39c: Energiequelle
- 40, 42: Wickelkörper
- 40a, 42a: Wickelträger
- 40b, c: Schenkel
- 40e, f: Verbindungselement
- 401e, f: Befestigungskopf
- 42b, c: Schenkel
- 43: Wickelbereich
- 52, 54, 56: Verbindungsleiter
- 521-561: Spulenanschlussbereich
- 52b-56b: Ausnehmung
- 52c-56c: Leistungsanschlussbereich
- 522-562: Befestigungsöffnung
- 522a-562a: größere Befestigungsöffnung
- 522b-562b: kleinere Befestigungsöffnung
- 524-564: Zentrieröffnung
- 524a-564a: größere Zentrieröffnung
- 524b-564b: kleinere Zentrieröffnung
- 526,566: Ausnehmung
- 58: Kunststoffmatrix
- 60: Befestigungsdurchgang
- 62: Ringraum
- 64: Zentrierdurchgang
- 66: Ringraum
- A: Drehachse

## Patentansprüche

1. Verschaltungseinrichtung (38) für eine Statorwicklung einer rotierenden elektrischen Maschine (10) umfassend
- eine Mehrzahl von Verbindungsleitern (52, 54, 56), welche als Ringscheiben ausgeführt und koaxial gestapelt sind und welche gegenseitig elektrisch isoliert sind, wobei
- jeder Verbindungsleiter (52-56) mehrere in Umfangsrichtung verteilte Befestigungsöffnungen (522- 562) zur Festlegung der Verschaltungseinrichtung (38) an einem Stator (16) aufweist und wobei
- die Verbindungsleiter (52-56) derart gestapelt sind, dass die Befestigungsöffnungen (522-562) satzweise axial zueinander positioniert sind und
sich unter Ausbildung
eines Befestigungsdurchgangs (60) im Wesentlichen überdecken, wobei
- die Verbindungsleiter (52-56) axial voneinander beabstandet und mit einem Kunststoff (58) umgossen sind, wodurch die Verschaltungseinrichtung (38) ein Metall-Kunststoffverbundteil ausbildet,
**dadurch gekennzeichnet, dass**
- zumindest zwei Arten von Befestigungsöffnungen (522-562) mit einer unterschiedlichen Öffnungsweite vorgesehen sind, welche größere Befestigungsöffnungen (522a-562a) und kleinere Befestigungsöffnungen (522b-562b) ausbilden, wobei
- an einem Befestigungsdurchgang (60) bei zwei benachbarten Verbindungsleitern (52-56) eine größere Befestigungsöffnung (522a-562a) und eine kleinere Befestigungsöffnung (522b-562b) ausgebildet sind,
- wobei ein Ringraum (62), der sich von einer Berandung der größeren Befestigungsöffnung (522a) bis zu einer Berandung der kleineren Befestigungsöffnung (542b) erstreckt, von dem Kunststoff (58) ausgefüllt ist.

2. Verschaltungseinrichtung nach Anspruch 1, **dadurch gekennzeichnet, dass** die zwei Arten von Befestigungsöffnungen (522a-562a, 522b-562b) mit einer unterschiedlichen Öffnungsweite an einem Verbindungsleiter 52; 54; 56 vorgesehen sind.

3. Verschaltungseinrichtung nach Anspruch 1 oder 2, **dadurch gekennzeichnet, dass** an den Verbindungsleitern (52-56) Zentrieröffnungen (524-564) vorgesehen sind, um die Mehrzahl der Verbindungsleiter (52-56) koaxial und gegenseitig voneinander beabstandet von einem Werkzeug aufzunehmen.

4. Verschaltungseinrichtung nach einem der Ansprüche 1-3, **dadurch gekennzeichnet, dass**
- die Verbindungsleiter (52 - 56) derart gestapelt sind, dass die Zentrieröffnungen (524- 564) satzweise axial zueinander positioniert sind und sich unter Ausbildung eines Zentrierdurchgangs (64) im Wesentlichen überdecken, wobei
- an jedem der Verbindungsleiter (52-56) zumindest zwei Arten von Zentrieröffnungen (524- 564) mit einer unterschiedlichen Öffnungsweite vorgesehen sind, welche eine größere Zentrieröffnung (524a- 564a) und eine kleinere Zentrieröffnung (524b- 564b) ausbilden, wobei
- die Verbindungsleiter (52 - 56) derart gestapelt sind, dass in einem Satz vor Zentrieröffnungen (524- 564) eine größere und eine kleinere Zentrieröffnung (524a- 564a; (524b- 564b) axial benachbart angeordnet sind und wobei
- ein Ringraum (66), der sich von der Berandung der jeweils größeren Zentrieröffnung (524a- 564a) bis maximal nahezu zu der Berandung der kleineren Zentrieröffnung (524b- 564b) erstreckt, jedoch diese unmittelbare Berandung nicht einschließt, mit dem Kunststoff (58) ausgefüllt ist.

5. Verschaltungseinrichtung nach Anspruch 4, **dadurch gekennzeichnet, dass** Zentrieröffnungen (524- 564) mit unterschiedlichen Durchmessern so verteilt sind, dass an einer gegebenen Umgangsposition der Verschaltungseinrichtung (38) nur jeweils einer der Verbindungsleiter (52-56) eine Zentrieröffnung mit dem kleineren Durchmesser (524b- 564b) ausbildet.

6. Verschaltungseinrichtung nach einem der Ansprüche 1-5, **dadurch gekennzeichnet, dass** die Verbindungsleiter (52-56) Spulenanschlussbereiche (52a-56a) für Spulenenden (36a, b) einer Statorwicklung und Leistungsanschlussbereiche (52c-56c) zur Stromversorgung einer elektrischen Maschine (10) aufweisen, wobei die Spulenanschlussbereiche (52a-56a) als radial nach innen oder außen abstehende Fortsätze ausgebildet sind, welche zur Verschaltung mit Spulenenden (36a, b) eines Stators (16) in einer gemeinsamen Radialebene angeordnet sind.

7. Verschaltungseinrichtung nach einem der Ansprüche 1-6, **dadurch gekennzeichnet, dass** an einem Verbindungsleiter (52-56) eine Ausnehmung (52b-56b) vorgesehen ist, in welche ein Spulenanschlussbereich (521-561) eines weiteren Verbindungsleiters (52-56) eingreift.

8. Stator (16) einer elektrischen Maschine, wobei der Stator (16) eine Verschaltungseinrichtung (38) nach einem der Ansprüche 1-7 aufweist.

9. Stator nach Anspruch 8, **dadurch gekennzeichnet, dass** der Stator (16) eine Statorwicklung mit mehreren Statorspulen (36) umfasst, wobei die Verschaltungseinrichtung (38) an Verbindungselementen (40e, f) von Wickelkörpern (40) der Statorspulen (36) festgelegt ist.

10. Elektrische Maschine (10) mit einem Rotor (14) und mit einem Stator (16) nach Anspruch 8 oder 9.

## Claims

1. Interconnection device (38) for a stator winding of a rotating electrical machine (10), comprising
- a plurality of connecting conductors (52, 54, 56) which are designed as annular discs and are coaxially stacked and which are electrically insulated from one another, wherein
- each connecting conductor (52-56) has a plurality of fastening openings (522-562), distributed in the circumferential direction, for securing the interconnection device (38) to a stator (16), and wherein
- the connecting conductors (52-56) are stacked in such a way that the fastening openings (522-562) are positioned axially in relation to one another in sets and substantially overlap so as to form a fastening passage (60), wherein
- the connecting conductors (52-56) are axially spaced apart from one another and are encapsulated by a plastic (58), as a result of which the interconnection device (38) forms a metal/plastic composite part,
**characterized in that**
- at least two types of fastening openings (522-562) with different opening widths are provided, which fastening openings form relatively large fastening openings (522a-562a) and relatively small fastening openings (522b-562b), wherein
- a relatively large fastening opening (522a-562a) and a relatively small fastening opening (522b-562b) are formed on a fastening passage (60) in the case of two adjacent connecting conductors (52-56),
- wherein an annular space (62), which extends from a boundary of the relatively large fastening opening (522a) as far as a boundary of the relatively small fastening opening (542b), is filled by the plastic (58) .

2. Interconnection device according to Claim 1, **characterized in that** the two types of fastening openings (522a-562a, 522b-562b) with different opening widths are provided on a connecting conductor (52; 54; 56).

3. Interconnection device according to Claim 1 or 2, **characterized in that** centring openings (524-564) are provided on the connecting conductors (52-56) for the plurality of connecting conductors (52-56) to be received coaxially and mutually spaced apart from one another by a mould.

4. Interconnection device according to one of Claims 1-3, **characterized in that**
- the connecting conductors (52-56) are stacked in such a way that the centring openings (524-564) are positioned axially in relation to one another in sets and substantially overlap so as to form a centring passage (64), wherein
- at least two types of centring openings (524-564) with different opening widths are provided on each of the connecting conductors (52-56), which centring openings form a relatively large centring opening (524a-564a) and a relatively small centring opening (524b-564b), wherein
- the connecting conductors (52-56) are stacked in such a way that, in a set of centring openings (524-564), a relatively large and a relatively small centring opening (524a-564a; 524b-564b) are arranged axially adjacently, and wherein
- an annular space (66), which extends from the boundary of the respectively relatively large centring opening (524a-564a) as far as at most almost the boundary of the relatively small centring opening (524b-564b), but does not include this immediate boundary, is filled with the plastic (58).

5. Interconnection device according to Claim 4, **characterized in that** centring openings (524-564) with different diameters are distributed such that only in each case one of the connecting conductors (52-56) forms a centring opening with the relatively small diameter (524b-564b) at a specified circumferential position of the interconnection device (38).

6. Interconnection device according to one of Claims 1-5, **characterized in that** the connecting conductors (52-56) have coil connection regions (52a-56a) for coil ends (36a, b) of a stator winding and power connection regions (52c-56c) for supplying power to an electrical machine (10), wherein the coil connection regions (52a-56a) are in the form of radially inwardly or outwardly protruding projections which, for interconnection with coil ends (36a, b) of a stator (16), are arranged in a common radial plane.

7. Interconnection device according to one of Claims 1-6, **characterized in that** a recess (52b-56b) is provided on a connecting conductor (52-56), a coil connection region (521-561) of a further connecting conductor (52-56) engaging into the said recess.

8. Stator (16) of an electrical machine, wherein the stator (16) has an interconnection device (38) according to one of Claims 1-7.

9. Stator according to Claim 8, **characterized in that** the stator (16) comprises a stator winding with a plurality of stator coils (36), wherein the interconnection device (38) is secured to connecting elements (40e, f) of winding bodies (40) of the stator coils (36).

10. Electrical machine (10) comprising a rotor (14) and comprising a stator (16) according to Claim 8 or 9.

## Revendications

1. Dispositif de câblage (38) pour un bobinage de stator d'une machine électrique rotative (10) comprenant :
- une pluralité de conducteurs de connexion (52, 54, 56), qui sont réalisés sous forme de disques annulaires et empilés coaxialement et qui sont mutuellement isolés électriquement,
- chaque conducteur de connexion (52-56) présentant plusieurs ouvertures de fixation (522-562) réparties dans la direction périphérique pour la fixation du dispositif de câblage (38) sur un stator (16) et
- les conducteurs de connexion (52-56) étant empilés de telle sorte que les ouvertures de fixation (522-562) sont positionnées axialement les unes par rapport aux autres par ensembles et se recouvrent essentiellement en formant un passage de fixation (60),
- les conducteurs de connexion (52-56) étant espacés axialement les uns des autres et étant enrobés d'une matière plastique (58), le dispositif de câblage (38) formant ainsi une pièce composite métal-matière plastique,
**caractérisé en ce que**
- au moins deux types d'ouvertures de fixation (522-562) ayant une largeur d'ouverture différente sont prévus, qui forment des ouvertures de fixation plus grandes (522a-562a) et des ouvertures de fixation plus petites (522b-562b),
- une ouverture de fixation plus grande (522a-562a) et une ouverture de fixation plus petite (522b-562b) étant formées pour deux conducteurs de connexion (52-56) voisins au niveau d'un passage de fixation (60),
- un espace annulaire (62), qui s'étend d'un bord de la plus grande ouverture de fixation (522a) jusqu'à un bord de la plus petite ouverture de fixation (542b), étant rempli par la matière plastique (58).

2. Dispositif de câblage selon la revendication 1, **caractérisé en ce que** les deux types d'ouvertures de fixation (522a-562a, 522b-562b) ayant une largeur d'ouverture différente sont prévus sur un conducteur de connexion (52 ; 54 ; 56).

3. Dispositif de câblage selon la revendication 1 ou 2, **caractérisé en ce que** des ouvertures de centrage (524-564) sont prévues sur les conducteurs de connexion (52-56), afin de recevoir la pluralité de conducteurs de connexion (52-56) coaxialement et espacés mutuellement les uns des autres par un outil.

4. Dispositif de câblage selon l'une quelconque des revendications 1 à 3, **caractérisé en ce que**
- les conducteurs de connexion (52-56) sont empilés de telle sorte que les ouvertures de centrage (524-564) sont positionnées axialement les unes par rapport aux autres par ensembles et se recouvrent essentiellement en formant un passage de centrage (64),
- au moins deux types d'ouvertures de centrage (524-564) ayant une largeur d'ouverture différente étant prévus sur chacun des conducteurs de connexion (52-56), qui forment une ouverture de centrage plus grande (524a-564a) et une ouverture de centrage plus petite (524b-564b),
- les conducteurs de connexion (52-56) étant empilés de telle sorte que, dans un ensemble d'ouvertures de centrage (524-564), une ouverture de centrage plus grande et une ouverture de centrage plus petite (524a-564a ; 524b-564b) sont agencées de manière axialement voisine, et
- un espace annulaire (66), qui s'étend du bord de la plus grande ouverture de centrage respective (524a-564a) jusqu'au plus presque au bord de la plus petite ouverture de centrage (524b-564b), mais qui n'inclut pas ce bord direct, étant rempli avec la matière plastique (58) .

5. Dispositif de câblage selon la revendication 4, **caractérisé en ce que** des ouvertures de centrage (524-564) ayant des diamètres différents sont réparties de telle sorte qu'à une position de manipulation donnée du dispositif de câblage (38), un seul des conducteurs de connexion (52-56) forme une ouverture de centrage ayant le plus petit diamètre (524b-564b).

6. Dispositif de câblage selon l'une quelconque des revendications 1 à 5, **caractérisé en ce que** les conducteurs de connexion (52-56) présentent des zones de raccordement de bobine (52a-56a) pour des extrémités de bobine (36a, b) d'un bobinage de stator et des zones de raccordement de puissance (52c-56c) pour l'alimentation en courant d'une machine électrique (10), les zones de raccordement de bobine (52a-56a) étant configurées sous forme de prolongements faisant saillie radialement vers l'intérieur ou l'extérieur, qui sont agencés dans un plan radial commun pour le câblage avec des extrémités de bobine (36a, b) d'un stator (16).

7. Dispositif de câblage selon l'une quelconque des revendications 1 à 6, **caractérisé en ce qu'**un évidement (52b-56b) est prévu sur un conducteur de connexion (52-56), dans lequel s'engage une zone de raccordement de bobine (521-561) d'un autre conducteur de connexion (52-56).

8. Stator (16) d'une machine électrique, le stator (16) présentant un dispositif de câblage (38) selon l'une quelconque des revendications 1 à 7.

9. Stator selon la revendication 8, **caractérisé en ce que** le stator (16) comprend un bobinage de stator muni de plusieurs bobines de stator (36), le dispositif de câblage (38) étant fixé à des éléments de connexion (40e, f) de corps de bobinage (40) des bobines de stator (36).

10. Machine électrique (10) comprenant un rotor (14) et comprenant un stator (16) selon la revendication 8 ou 9.
